# EUROPÄISCHE PATENTSCHRIFT

(11) **EP 2 087 251 B1**
(45) Veröffentlichungstag und Bekanntmachung des Hinweises auf die Patenterteilung: **26.05.2010**
(21) Anmeldenummer: 07821250.3
(22) Anmeldetag: 12.10.2007
(51) Int. Cl.: F16D 1/08, F16D 1/068, F16H 57/02

(54) **WELLE-ZAHNRAD-VERBINDUNG**
SHAFT-GEAR CONNECTION
RACCORD ARBRE-ROUE DENTÉE

(30) Priorität: 04.11.2006 DE 102006052104
(43) Veröffentlichungstag der Anmeldung: 12.08.2009
(73) Patentinhaber: ZF Friedrichshafen AG, 88038 Friedrichshafen (DE)
(72) Erfinder: HÄRDTLE, Wilhelm, 88677 Markdorf (DE)
(86) Internationale Anmeldenummer: PCT/EP2007/060883
(87) Internationale Veröffentlichungsnummer: WO 2008/052868

(56) Entgegenhaltungen:
- EP-A- 1 645 346
- DE-A1- 4 204 814
- DE-A1- 10 319 629
- US-A- 5 632 684

## Beschreibung

Die vorliegende Erfindung betrifft eine Welle-Zahnrad-Verbindung mit einer Welle und einem aufgeschrumpften Zahnrad, das einen ersten axialen Abschnitt, der mittels eines ersten Schrumpfsitzes an der Welle befestigt ist, und einen zweiten axialen Abschnitt aufweist, der mittels eines zweiten Schrumpfsitzes an der Welle befestigt ist, wobei durch den zweiten Schrumpfsitz größere Drehmomente als durch den ersten Schrumpfsitz von dem Zahnrad auf die Welle übertragen werden können. Die vorliegende Erfindung betrifft ferner ein Verfahren zur Erzeugung einer solchen Welle-Zahnrad-Verbindung.

Drehmoment übertragende Wellen mit darauf angeordneten Zahnrädern sind im Getriebebau weit verbreitet. Zur Befestigung dieser Zahnräder auf der Welle gibt es eine Vielzahl von Möglichkeiten, wobei die Verbindungsarten in elementare Welle-Nabe-Verbindungen und in kombinierte Welle-Nabe-Verbindungen unterteilt werden.

Die elementaren Welle-Nabe-Verbindungen umfassen formschlüssige Verbindungen, wie beispielsweise die Keilwellenverbindung, die Kerbzahnverbindung, die Evolventenprofilverbindung, die Polygonprofilverbindung, die Passfederverbindung und die Stiftverbindung, die kraftschlüssigen Verbindungen, wie beispielsweise die Press- und Schrumpfverbindung, die Keilverbindung, die Spannringverbindung, die Spannscheibenverbindung und die Sternscheibenverbindung, und die stoffschlüssigen Verbindungen, wie beispielsweise die Schweißverbindung, die Lötverbindung und die Klebverbindung.

Die kombinierten Welle-Nabe-Verbindungen umfassen nichtstoffschlüssige Verbindungen, wie beispielsweise die Press-Rändel-Verbindung und die Presspunktschlussverbindung, die nichtstoffschlüssigen-stoffschlüssigen Verbindungen, wie beispielsweise die Press-Kleb-Verbindung, die Press-Presslöt-Verbindung und die Press-Schweiß-Verbindung, und die stoffschlüssigen Verbindungen, wie beispielsweise die Löt-Schweiß-Verbindungen.

Den oben beschriebenen bekannten Verbindungsarten haftet der Nachteil an, dass sie Bewegungen der Bauteile bzw. Zahnräder auf der Welle nicht verhindern können. Trotz optimierter Auslegungen treten beispielsweise infolge von Lastspitzen Mikrowanderungen auf. Insbesondere bei Getrieben, bei denen exakte Zuordnungen der Verzahnungen verschiedener Zahnräder zueinander eine entscheidende Rolle spielen, müssen derartige Wanderungen der Zahnräder auf den Wellen unbedingt vermieden werden. Dies ist speziell bei Getrieben mit Lastverteilung auf zwei oder mehr Vorgelegewellen der Fall, hierbei ist für die gesamte Lebensdauer des Getriebes eine absolute Stellungsgenauigkeit Voraussetzung.

Um das vorstehend genannte Problem zu lösen, schlägt die DE 196 20 330 A1 eine Welle-Nabe-Verbindung für ein Bauteil auf einer Welle vor, bei der das Bauteil zum einen auf der Welle aufgeschrumpft ist und zum anderen zusätzlich durch eine formschlüssige Verbindung zur Vermeidung von Bewegungen gehalten ist. Genauer gesagt schlägt die genannte Druckschrift vor, ein Zahnrad zum einen mittels eines Schrumpfsitzes an der Welle zu befestigen und zum anderen ein stiftförmiges Element vorzusehen, das sich einerseits in die Welle und andererseits in das Zahnrad erstreckt, um eine formschlüssige Verbindung zu erhalten.

Aus der DE 103 19 629 A1 ist eine weitere dauerhafte Welle-Nabe-Verbindung bekannt, bei der das Zahnrad mittels eines Schrumpfsitzes, das heißt durch Aufschrumpfen, an der Welle befestigt ist. Die genannte Druckschrift schlägt ferner vor, dass sich unmittelbar benachbarte Zahnräder teilweise überlagern, wobei die aneinander grenzenden Bereiche der Zahnräder ebenfalls-über-einen Schrumpfsitz miteinander verbunden sind.

Die aus den vorgenannten Druckschriften bekannten Welle-Nabe-Verbindungen umfassen Zahnräder mit einem ersten axialen Abschnitt, der eine Außenverzahnung aufweist, und einem zweiten axialen Abschnitt, der keinerlei Verzahnung aufweist. Durch das Aufschrumpfen dieser Zahnräder auf die Welle entstehen Schrumpfspannungen, die sich im Betrieb der Welle-Zahnrad-Verbindung mit den Fußspannungen der Verzahnung überlagern, so dass im ersten Abschnitt ein mehrachsiger Spannungszustand entsteht. Dieser mehrachsige Spannungszustand kann im schlimmsten Falle zu einem Bruch eines oder mehrerer Zähne der Verzahnung führen. Aus diesem Grunde ist man in der Praxis dazu übergegangen, in dem ersten axialen Abschnitt, der mit der Verzahnung versehen ist, einen schwächeren Schrumpfsitz als im zweiten axialen Abschnitt zu erzeugen, so dass die Schrumpfspannungen im ersten axialen Abschnitt geringer sind. So kann durch die Verringerung der Schrumpfspannungen im ersten axialen Abschnitt eine Beschädigung der Verzahnung durch Spannungsüberlagerungen verhindert werden. Diese Maßnahme bringt jedoch den Nachteil mit sich, dass das von dem Zahnrad auf die Welle übertragbare maximale Drehmoment verringert ist.

Der vorliegenden Erfindung liegt somit die Aufgabe zugrunde, eine Welle-Zahnrad-Verbindung mit einer Welle und einem aufgeschrumpften Zahnrad zu schaffen, die die Übertragung eines großen Drehmomentes von dem Zahnrad auf die Welle ermöglicht, wobei gleichzeitig eine Beschädigung der Verzahnung des Zahnrades wirksam unterbunden sein soll. Der vorliegenden Erfindung liegt ferner die Aufgabe zugrunde, ein Verfahren zur Erzeugung einer solchen vorteilhaften Welle-Zahnrad-Verbindung anzugeben.

Die Lösung dieser Aufgabe erfolgt anhand der in Patentanspruch 1 bzw. 11 angegebenen Merkmale. Vorteilhafte Ausführungsformen der Erfindung sind Gegenstand der Unteransprüche.

Die erfindungsgemäße Welle-Zahnrad-Verbindung weist eine Welle und ein auf der Welle aufgeschrumpftes Zahnrad auf. Das Zahnrad umfasst einen ersten axialen Abschnitt, der mittels eines ersten Schrumpfsitzes an der Welle befestigt ist, und einen zweiten axialen Abschnitt, wobei der zweite axiale Abschnitt mittels eines zweiten Schrumpfsitzes an der Welle befestigt ist. Der zweite Schrumpfsitz ist dabei derart ausgebildet, dass durch diesen größere Drehmomente als durch den ersten Schrumpfsitz von dem Zahnrad auf die Welle oder umgekehrt übertragen werden können. Erfindungsgemäß ist zwischen dem ersten axialen Abschnitt und dem zweiten axialen Abschnitt ein axialer Zwischenabschnitt vorgesehen, der mittels eines dritten Schrumpfsitzes an der Welle befestigt ist. Durch den dritten Schrumpfsitz können größere Drehmomente als durch den ersten Schrumpfsitz und kleinere Drehmomente als durch den zweiten Schrumpfsitz von dem Zahnrad auf die Welle übertragen werden. Dieses Merkmal bezieht sich auf die jeweils maximal übertragbaren Drehmomente. Die unterschiedliche Übertragbarkeit von Drehmomenten kann hierbei beispielsweise durch entsprechende Auswahl der Flächenpressung im ersten axialen Abschnitt, im zweiten axialen Abschnitt und im axialen Zwischenabschnitt beim Aufschrumpfen erzielt werden.

Durch den axialen Zwischenabschnitt und der erfindungsgemäßen Auswahl des dritten Schrumpfsitzes kann ein kontinuierlicher Spannungsübergang zwischen dem ersten axialen Abschnitt und dem zweiten axialen Abschnitt erreicht werden. Dieser kontinuierliche Spannungsübergang bewirkt wiederum, dass größere Drehmomente, die beispielsweise über eine Verzahnung im ersten axialen Abschnitt eingeleitet werden, von dem Zahnrad auf die Welle der Welle-Zahnrad-Verbindung übertragen werden können.

In einer bevorzugten Ausführungsform der erfindungsgemäßen Welle-Zahnrad-Verbindung ist der dritte Schrumpfsitz derart ausgebildet, dass die Höhe des von dem Zahnrad auf die Welle übertragbaren-Drehmoments in Richtung des zweiten axialen Abschnitts in dem axialen Zwischenabschnitt vergrößert ist. Eine solche Vergrößerung des übertragbaren Drehmoments in Richtung des zweiten axialen Abschnitts kann beispielsweise stufenweise erfolgen. Besonders vorteilhaft wäre jedoch die nachstehend erläuterte Ausführungsform.

Bei dieser besonders bevorzugten Ausführungsform der erfindungsgemäßen Welle-Zahnrad-Verbindung ist der dritte Schrumpfsitz derart ausgebildet, dass die Höhe des von dem Zahnrad auf die Welle übertragbaren Drehmoments in Richtung des zweiten axialen Abschnitts in dem axialen Zwischenabschnitt kontinuierlich bzw. stetig vergrößert ist. Indem der Spannungsübergang zwischen dem ersten axialen Abschnitt und dem zweiten axialen Abschnitt kontinuierlich ausgebildet ist, kann die Höhe des von dem Zahnrad auf die Welle übertragbaren Drehmoments weiter vergrößert werden.

Gemäß einer vorteilhaften Ausführungsform der erfindungsgemäßen Welle-Zahnrad-Verbindung ist der erste axiale Abschnitt mit einer Verzahnung, vorzugsweise einer Außenverzahnung, versehen, wobei der zweite axiale Abschnitt keine Verzahnung aufweist.

In einer besonders vorteilhaften Ausführungsform der erfindungsgemäßen Welle-Zahnrad-Verbindung weist die Verzahnung eine Vielzahl von Zähnen auf, wobei die Zahnfüße der Zähne geschliffen sind. So können beispielsweise die Rechts- und Linksflanken der Zähne im Bereich der Zahnfüße geschliffen sein. Die geschliffenen Zahnfüße sind stärker belastbar als ungeschliffene Zahnfüße. Auf diese Weise ist es möglich, den ersten Schrumpfsitz im ersten axialen Abschnitt stärker auszubilden, da die Schrumpfspannungen im ersten axialen Abschnitt größer sein dürfen, ohne dass die Spannungsüberlagerung zu einer Beschädigung der Verzahnung führen würde. Durch einen stärkeren ersten Schrumpfsitz im ersten axialen Abschnitt ist es wiederum möglich, ein größeres Drehmoment über das Zahnrad auf die Welle zu übertragen.

Gemäß einer weiteren vorteilhaften Ausführungsform der erfindungsgemäßen Welle-Zahnrad-Verbindung sind die Zahnfüße der Zähne mit Hilfe eines Strahlverfahrens geschliffen. Vorzugsweise sind die Zahnfüße der Zähne durch Sand- und/oder Glasperlenstrahlen geschliffen. Bei diesem Strahlverfahren haben sich die Zahnfüße der Zähne als besonders robust erwiesen.

Um ein Abbrechen der Zähne im Bereich der Zahnfüße besonders wirksam zu verhindern, sind die Zahnfüße der Zähne in einer besonders bevorzugten Ausführungsform der erfindungsgemäßen Welle-Zahnrad-Verbindung mit Hilfe mindestens zweier aufeinander folgender Strahlverfahren geschliffen. Man spricht auch vom so genannten Duo-Strahlen des Zahnfußes. Vorzugsweise handelt es sich bei den aufeinander folgenden Strahlverfahren um zwei unterschiedliche Strahlverfahren, wie beispielsweise das Sandstrahlen und das Glasperlenstrahlen. Je stabiler der Zahnfuß der Zähne ausgebildet ist, umso stärker kann der erste Schrumpfsitz im ersten axialen Abschnitt ausgebildet sein und umso größer ist das von dem Zahnrad auf die Welle übertragbare Drehmoment.

In einer weiteren bevorzugten Ausführungsform der erfindungsgemäßen Welle-Zahnrad-Verbindung ist mindestens ein weiteres Zahnrad an der Welle befestigt, das nicht aufgeschrumpft ist. So kann das weitere Zahnrad beispielsweise mit Hilfe einer Passfeder an der Welle befestigt sein. Die Zahnfüße der Verzahnung des aufgeschrumpften Zahnrades sind im Verhältnis zu den Zahnfüßen der Verzahnung des nicht aufgeschrumpften Zahnrades dabei breiter ausgebildet. Auch hierdurch wird die Stabilität der Verzahnung des aufgeschrumpften Zahnrades erhöht, wodurch ein stärkerer erster Schrumpfsitz im ersten axialen Abschnitt möglich ist, der wiederum die Übertragbarkeit besonders großer Drehmomente von dem Zahnrad auf die Welle gewährleistet.

Gemäß einer weiteren vorteilhaften Ausführungsform der erfindungsgemäßen Welle-Zahnrad-Verbindung ist die Höhe der Zähne in Richtung des zweiten axialen Abschnitts verringert. Vorzugsweise ist die Höhe der Zähne in Richtung des zweiten axialen Abschnitts kontinuierlich verringert. So können sich die Zähne beispielsweise im Bereich des axialen Zwischenabschnitts erstrecken und kontinuierlich an Höhe verlieren, bis diese in den zweiten axialen Abschnitt übergehen.

Gemäß einer weiteren vorteilhaften Ausführungsform der erfindungsgemäßen Welle-Zahnrad-Verbindung ist das Zahnrad ferner mittels einer Reibschweißung an der Welle befestigt. Diese Reibschweißung ist vorteilhafter Weise durch Verdrehen der Welle gegenüber dem Zahnrad während oder nach dem Aufschrumpfvorgang erzeugt.

Das erfindungsgemäße Verfahren zur Erzeugung einer Welle-Zahnrad-Verbindung umfasst die nachstehend genannten Verfahrensschritte. Zunächst wird eine Welle und ein Zahnrad bereitgestellt, wobei das Zahnrad einen ersten axialen Abschnitt, einen zweiten axialen Abschnitt und einen axialen Zwischenabschnitt aufweist. Anschließend wird das Zahnrad auf die Welle aufgeschrumpft, so dass ein erster Schrumpfsitz in dem ersten axialen Abschnitt, ein zweiter Schrumpfsitz in dem zweiten axialen Abschnitt und ein dritter Schrumpfsitz in dem axialen Zwischenabschnitt entsteht. Das Aufschrumpfen erfolgt dabei derart, dass durch den dritten Schrumpfsitz größere Drehmomente als durch den ersten Schrumpfsitz und kleinere Drehmomente als durch den zweiten Schrumpfsitz von dem Zahnrad auf die Welle übertragen werden können. Dies kann beispielsweise dadurch erreicht werden, dass die Welle und/oder das Zahnrad unterschiedliche Außen- bzw. Innendurchmesser im Bereich der genannten Abschnitte aufweist, so dass in den genannten Abschnitten unterschiedliche Flächenpressungen erzielt werden. Bezüglich der Vorteile sei auf die vorangegangene Beschreibung der erfindungsgemäßen Welle-Zahnrad-Verbindung verwiesen.

In einer bevorzugten Ausführungsform des erfindungsgemäßen Verfahrens ist der erste axiale Abschnitt des bereitgestellten Zahnrades mit einer Verzahnung, vorzugsweise einer Außenverzahnung, mit einer Vielzahl von Zähnen versehen, während der zweite axiale Abschnitt keine Verzahnung aufweist, wobei die Zahnfüße der Zähne geschliffen werden. Hierbei kommen grundsätzlich alle gängigen Schleifverfahren in Frage.

Um jedoch besonders stabile Zahnfüße zu erzeugen, werden die Zahnfüße der Zähne in einer besonders bevorzugten Ausführungsform des erfindungsgemäßen Verfahrens mit Hilfe eines Strahlverfahrens geschliffen. Dies erfolgt vorzugsweise durch Sand- und/oder Glasperlenstrahlen.

In einer weiteren besonders bevorzugten Ausführungsform des erfindungsgemäßen Verfahrens werden die Zahnfüße der Zähne mit Hilfe mindestens zweier aufeinander folgender Strahlverfahren geschliffen, wobei vorzugsweise zwei unterschiedliche Strahlverfahren, wie beispielsweise das Sandstrahlen und das Glasperlenstrahlen, zum Einsatz kommen.

Um die maximal mögliche Drehmomentübertragung zwischen Zahnrad und Welle weiter zu erhöhen, werden die Welle und das Zahnrad in einer weiteren bevorzugten Ausführungsform des erfindungsgemäßen Verfahrens während oder nach dem Aufschrumpfen gegeneinander verdreht, um eine Reibschweißung zwischen Welle und Zahnrad zu erzeugen.

Die Erfindung wird im Folgenden anhand einer beispielhaften Ausführungsform unter Bezugnahme auf die zugehörigen Zeichnungen näher erläutert.

Es zeigen:
- Fig. 1: eine Seitenansicht einer Ausführungsform der erfindungsgemäßen Welle-Zahnrad-Verbindung in geschnittener Darstellung;
- Fig. 2: ein Diagramm zur Veranschaulichung des maximal übertragbaren Drehmoments in den axialen Abschnitten und
- Fig. 3: eine Teilansicht der Verzahnung des Zahnrades in Richtung des Pfeils A von Fig. 1

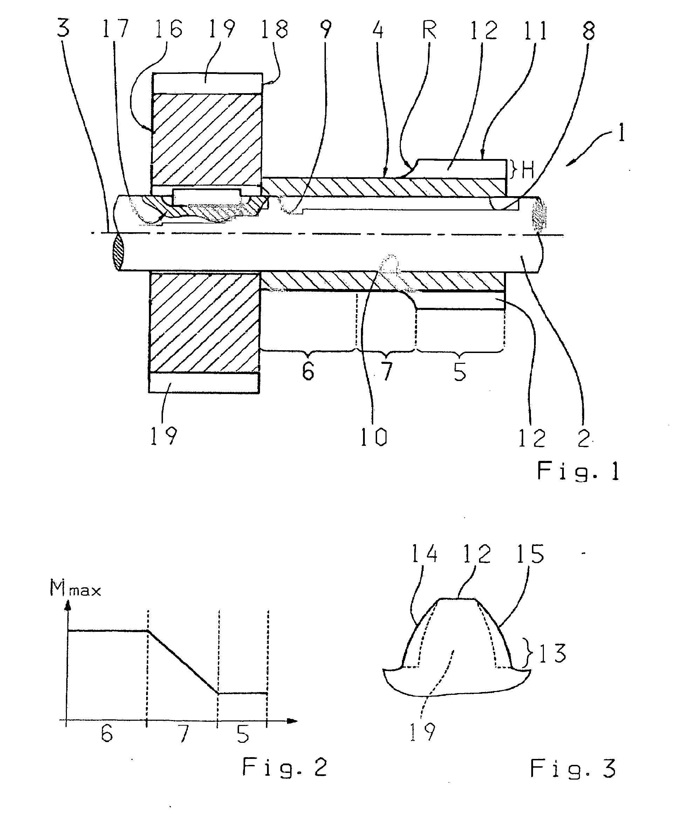

Fig. 1 zeigt eine Seitenansicht einer Ausführungsform der erfindungsgemäßen Welle-Zahnrad-Verbindung 1. Die Welle-Zahnrad-Verbindung 1 umfasst zunächst eine Welle 2, die um ihre Längsachse 3 rotierbar ist. Auf die Welle 2 ist ein Zahnrad 4 aufgeschrumpft. Das Zahnrad 4 umfasst einen ersten axialen Abschnitt 5 und einen zweiten axialen Abschnitt 6, wobei zwischen dem ersten axialen Abschnitt 5 und dem zweiten axialen Abschnitt 6 ein axialer Zwischenabschnitt 7 vorgesehen ist. Die genannten Abschnitte 5, 7, 6 schließen unmittelbar aneinander an.

Der erste axiale Abschnitt 5 ist mittels eines ersten Schrumpfsitzes 8 an der Welle 2 befestigt, während der zweite axiale Abschnitt 6 mittels eines zweiten Schrumpfsitzes 9 an der Welle 2 befestigt ist. Auch der axiale Zwischenabschnitt 7 ist über einen Schrumpfsitz an der Welle 2 befestigt, wobei dieser dritte Schrumpfsitz in Fig. 1 mit dem Bezugszeichen 10 gekennzeichnet ist.

Wie aus Fig. 2 ersichtlich, ist der zweite Schrumpfsitz 9 derart ausgebildet, dass im zweiten axialen Abschnitt 6 ein größeres maximales Drehmoment von dem Zahnrad 4 auf die Welle 2 übertragen werden kann als dies im ersten axialen Abschnitt 5 der Fall ist. Durch den dritten Schrumpfsitz 10 im axialen Zwischenabschnitt 7 kann wiederum ein größeres maximales Drehmoment von dem Zahnrad 4 auf die Welle 2 übertragen werden als dies in dem ersten axialen Abschnitt 5 der Fall ist, wobei das über den dritten Schrumpfsitz 10 übertragbare maximale Drehmoment wiederum geringer als das über den zweiten Schrumpfsitz 9 übertragbare maximale Drehmoment ist, wie dies aus Fig. 2 hervorgeht. Der dritte Schrumpfsitz 10 ist dabei derart ausgebildet, dass die Höhe des von dem Zahnrad 4 auf die Welle 2 übertragbaren maximalen Drehmoments in Richtung des zweiten axialen Abschnitts 6 in dem axialen Zwischenabschnitt 7 kontinuierlich bzw. stetig vergrößert ist. Auf diese Weise ergibt sich ein kontinuierlicher Spannungsübergang zwischen dem ersten axialen Abschnitt 5 und dem zweiten axialen Abschnitt 6.

Wie aus Fig. 1 ersichtlich, weist der erste axiale Abschnitt 5 des Zahnrades 4 eine Außenverzahnung 11 auf. Der zweite axiale Abschnitt 6 weist hingegen keinerlei Verzahnung auf. Die Außenverzahnung 11 ist vorzugsweise als Schrägverzahnung ausgebildet und umfasst eine Vielzahl von Zähnen 12. Einer der Zähne 12 ist beispielhaft in Fig. 3 dargestellt. Der der Längsachse 3 zugewandte Abschnitt eines jeden Zahnes 12 wird auch als Zahnfuß 13 bezeichnet. Die Linksflanke 14 und die Rechtsflanke 15 des Zahnes 12 sind zumindest im Bereich des Zahnfußes 13 mit Hilfe eines Strahlverfahrens, vorzugsweise Sand- und/oder Glasperlenstrahlen, geschliffen. Dabei wurden die Zahnfüße durch das so genannte Duo-Strahlen geschliffen, bei dem zwei aufeinander folgende Strahlverfahren unterschiedlicher Art angewendet werden, wie beispielsweise das Sandstrahlen und Glasperlenstrahlen. Darüber hinaus verringert sich die Höhe H der Zähne 12 in axialer Richtung und zwar in Richtung des zweiten axialen Abschnitts 6. Die Höhe H verringert sich dabei kontinuierlich, wobei der Verlauf der oberen Kante in der Seitenansicht kreisbogenförmig ist. So kann durch Wahl eines besonders großen Radius R für den Kreisbogen ein besonders kontinuierlicher Übergang von der Verzahnung zu dem axialen Zwischenabschnitt 7 oder dem zweiten axialen Abschnitt 6 erzeugt werden. Letzteres führt zu einem besonders guten und kontinuierlichen Spannungsübergang zwischen den Abschnitten 5, 6, 7.

An der Welle 2 ist ferner mindestens ein weiteres Zahnrad 16 befestigt, das nicht auf die Welle 2 aufgeschrumpft ist. Das Zahnrad 16 ist im vorliegenden Beispiel vielmehr mittels einer Passfederverbindung 17 mit der Welle 2 verbunden. Auch das weitere Zahnrad 16 weist eine Außenverzahnung 18 auf, die sich aus mehreren Zähnen 19 zusammensetzt. Die Zahnfüße 13 der Verzahnung 11 des aufgeschrumpften Zahnrades 4 sind im Verhältnis zu den Zahnfüßen der Verzahnung 18 des nicht aufgeschrumpften Zahnrades 16 jedoch breiter ausgebildet, wie dies in Fig. 3 angedeutet ist, in der die Zähne 19 der Verzahnung 18 des Zahnrades 16 gestrichelt angedeutet sind.

Das Zahnrad 4 ist ferner mittels einer Reibschweißung an der Welle 2 befestigt. Diese Reibschweißung wurde dadurch erzeugt, dass das Zahnrad 4 während oder nach dem Aufschrumpfen auf die Welle 2 gegenüber der Welle 2 um die Längsachse 3 verdreht wurde, wodurch eine Reibschweißverbindung entsteht. Die unterschiedlichen Stärken der Schrumpfsitze 8, 9, 10 können beispielsweise dadurch erzielt werden, dass die Welle 2 und/oder das Zahnrad 4 in den Abschnitten 5, 6, 7 geringfügig unterschiedliche Außen- bzw. Innendurchmesser aufweist. Hierdurch werden nach dem Aufschrumpfen unterschiedliche Flächenpressungen erzielt, die letztlich die unterschiedlich starken Schrumpfsitze und die unterschiedliche Übertragbarkeit von Drehmomenten bedingen.

### Bezugszeichen

- 1: Welle-Zahnrad-Verbindung
- 2: Welle
- 3: Längsachse
- 4: Zahnrad
- 5: erster axialer Abschnitt
- 6: zweiter axialer Abschnitt
- 7: axialer Zwischenabschnitt
- 8: erster Schrumpfsitz
- 9: zweiter Schrumpfsitz
- 10: dritter Schrumpfsitz
- 11: Außenverzahnung
- 12: Zähne
- 13: Zahnfuß
- 14: Linksflanke
- 15: Rechtsflanke
- 16: weiteres Zahnrad
- 17: Passfederverbindung
- 18: Außenverzahnung
- 19: Zähne

- H: Höhe der Zähne
- Mₘₐₓ: maximal übertragbares Drehmoment eines Abschnitts
- R: Radius

## Patentansprüche

1. Welle-Zahnrad-Verbindung mit einer Welle (2) und einem aufgeschrumpften Zahnrad (4), das einen ersten axialen Abschnitt (5), der mittels eines ersten Schrumpfsitzes (8) an der Welle befestigt ist, und einen zweiten axialen Abschnitt (6) aufweist, der mittels eines zweiten Schrumpfsitzes (9) an der Welle befestigt ist, wobei durch den zweiten Schrumpfsitz (9) größere Drehmomente als durch den ersten Schrumpfsitz (8) von dem Zahnrad (4) auf die Welle (2) übertragbar sind, **dadurch gekennzeichnet, dass** zwischen dem ersten axialen Abschnitt (5) und dem zweiten axialen Abschnitt (6) ein axialer Zwischenabschnitt (7) vorgesehen ist, der mittels eines dritten Schrumpfsitzes (10) an der Welle (2) befestigt ist, wobei durch den dritten Schrumpfsitz (10) größere Drehmomente als durch den ersten Schrumpfsitz (8) und kleinere Drehmomente als durch den zweiten Schrumpfsitz (9) von dem Zahnrad (4) auf die Welle (2) übertragbar sind.

2. Welle-Zahnrad-Verbindung nach Anspruch 1, **dadurch gekennzeichnet, dass** der dritte Schrumpfsitz (10) derart ausgebildet ist, dass die Höhe des von dem Zahnrad (4) auf die Welle (2) übertragbaren Drehmoments in Richtung des zweiten axialen Abschnitts (6) in dem axialen Zwischenabschnitt (7) vergrößert ist.

3. Welle-Zahnrad-Verbindung nach Anspruch 2, **dadurch gekennzeichnet, dass** der dritte Schrumpfsitz (10) derart ausgebildet ist, dass die Höhe des von dem Zahnrad (4) auf die Welle (2) übertragbaren Drehmoments in Richtung des zweiten axialen Abschnitts (6) in dem axialen Zwischenabschnitt (7) kontinuierlich vergrößert ist.

4. Welle-Zahnrad-Verbindung nach einem der vorangehenden Ansprüche, **dadurch gekennzeichnet, dass** der erste axiale Abschnitt (5) mit einer Verzahnung (11), vorzugsweise einer Außenverzahnung, versehen ist, während der zweite axiale Abschnitt (6) keine Verzahnung aufweist.

5. Welle-Zahnrad-Verbindung nach Anspruch 4, **dadurch gekennzeichnet, dass** die Verzahnung (11) eine Vielzahl von Zähnen (12) umfasst, wobei die Zahnfüße (13) der Zähne (12) geschliffen sind.

6. Welle-Zahnrad-Verbindung nach Anspruch 5, **dadurch gekennzeichnet, dass** die Zahnfüße (13) der Zähne (12) mit Hilfe eines Strahlverfahrens, vorzugsweise Sand- und/oder Glasperlenstrahlen, geschliffen sind.

7. Welle-Zahnrad-Verbindung nach Anspruch 6, **dadurch gekennzeichnet, dass** die Zahnfüße (13) der Zähne (12) mit Hilfe mindestens zweier aufeinander folgender Strahlverfahren geschliffen sind, vorzugsweise mit Hilfe zweier unterschiedlicher Strahlverfahren.

8. Welle-Zahnrad-Verbindung nach einem der Ansprüche 4 bis 7, **dadurch gekennzeichnet, dass** mindestens ein weiteres Zahnrad (16) an der Welle (2) befestigt ist, das nicht aufgeschrumpft ist, wobei die Zahnfüße (13) der Verzahnung (11) des aufgeschrumpften Zahnrades (4) im Verhältnis zu den Zahnfüßen der Verzahnung (18) des nicht aufgeschrumpften Zahnrades (16) breiter ausgebildet sind.

9. Welle-Zahnrad-Verbindung nach einem der Ansprüche 4 bis 8, **dadurch gekennzeichnet, dass** die Höhe (H) der Zähne (12) in Richtung des zweiten axialen Abschnitts (6), vorzugsweise kontinuierlich, verringert ist.

10. Welle-Zahnrad-Verbindung nach einem der vorangehenden Ansprüche, **dadurch gekennzeichnet, dass** das Zahnrad (4) ferner mittels einer Reibschweißung an der Welle (2) befestigt ist.

11. Verfahren zur Erzeugung einer Welle-Zahnrad-Verbindung mit den Verfahrensschritten:
- Bereitstellen einer Welle und eines Zahnrades mit einem ersten axialen Abschnitt, einem zweiten axialen Abschnitt und einem axialen Zwischenabschnitt und
- Aufschrumpfen des Zahnrades auf die Welle, so dass ein erster Schrumpfsitz in dem ersten axialen Abschnitt, ein zweiter Schrumpfsitz in dem zweiten axialen Abschnitt und ein dritter Schrumpfsitz in dem axialen Zwischenabschnitt entsteht, wobei durch den dritten Schrumpfsitz größere Drehmomente als durch den ersten Schrumpfsitz und kleinere Drehmomente als durch den zweiten Schrumpfsitz von dem Zahnrad auf die Welle übertragen werden können.

12. Verfahren zur Erzeugung einer Welle-Zahnrad-Verbindung nach Anspruch 11, **dadurch gekennzeichnet, dass** der erste axiale Abschnitt des bereitgestellten Zahnrades mit einer Verzahnung, vorzugsweise einer Außenverzahnung, mit einer Vielzahl von Zähnen versehen ist, während der zweite axiale Abschnitt keine Verzahnung aufweist, wobei die Zahnfüße der Zähne geschliffen werden.

13. Verfahren zur Erzeugung einer Welle-Zahnrad-Verbindung nach Anspruch 12, **dadurch gekennzeichnet, dass** die Zahnfüße der Zähne mit Hilfe eines Strahlverfahrens geschliffen werden, vorzugsweise durch Sand- und/oder Glasperlenstrahlen.

14. Verfahren zur Erzeugung einer Welle-Zahnrad-Verbindung nach Anspruch 13, **dadurch gekennzeichnet, dass** die Zahnfüße der Zähne mit Hilfe mindestens zweier aufeinander folgender Strahlverfahren geschliffen werden, vorzugsweise mit Hilfe zweier unterschiedlicher Strahlverfahren.

15. Verfahren zur Erzeugung einer Welle-Zahnrad-Verbindung nach einem der Ansprüche 11-14 **dadurch gekennzeichnet, dass** die Welle und das Zahnrad während oder nach dem Aufschrumpfen gegeneinander verdreht werden, um eine Reibschweißung zwischen Welle und Zahnrad zu erzeugen.

## Claims

1. Shaft/gearwheel connection having a shaft (2) and a shrunk-on gearwheel (4) which has a first axial section (5) which is fastened to the shaft by means of a first shrink fit (8) and a second axial section (6) which is fastened to the shaft by means of a second shrink fit (9), it being possible for greater torques to be transmitted from the gearwheel (4) to the shaft (2) by the second shrink fit (9) than by the first shrink fit (8), **characterized in that** an axial intermediate section (7) which is fastened to the shaft (2) by means of a third shrink fit (10) is provided between the first axial section (5) and the second axial section (6), it being possible for greater torques to be transmitted from the gearwheel (4) to the shaft (2) by the third shrink fit (10) than by the first shrink fit (8) and for smaller torques to be transmitted from the gearwheel (4) to the shaft (2) by the third shrink fit (10) than by the second shrink fit (9).

2. Shaft/gearwheel connection according to Claim 1, **characterized in that** the third shrink fit (10) is configured in such a way that the magnitude of the torque which can be transmitted from the gearwheel (4) to the shaft (2) is increased in the axial intermediate section (7) in the direction of the second axial section (6).

3. Shaft/gearwheel connection according to Claim 2, **characterized in that** the third shrink fit (10) is configured in such a way that the magnitude of the torque which can be transmitted from the gearwheel (4) to the shaft (2) is increased continuously in the axial intermediate section (7) in the direction of the second axial section (6).

4. Shaft/gearwheel connection according to one of the preceding claims, **characterized in that** the first axial section (5) is provided with a toothing system (11), preferably with an external toothing system, whereas the second axial section (6) does not have a toothing system.

5. Shaft/gearwheel connection according to Claim 4, **characterized in that** the toothing system (11) comprises a multiplicity of teeth (12), the tooth roots (13) of the teeth (12) being ground.

6. Shaft/gearwheel connection according to Claim 5, **characterized in that** the gear roots (13) of the teeth (12) are ground with the aid of a blasting process, preferably sand blasting and/or glass bead blasting.

7. Shaft/gearwheel connection according to Claim 6, **characterized in that** the tooth roots (13) of the teeth (12) are ground with the aid of at least two blasting processes which follow one another, preferably with the aid of two different blasting processes.

8. Shaft/gearwheel connection according to one of Claims 4 to 7, **characterized in that** at least one further gearwheel (16) which is not shrunk on is fastened to the shaft (2), the tooth roots (13) of the toothing system (11) of the shrunk-on gearwheel (4) being of broader configuration in comparison with the tooth roots of the toothing system (18) of the gearwheel (16) which is not shrunk on.

9. Shaft/gearwheel connection according to one of Claims 4 to 8, **characterized in that** the height (H) of the teeth (12) is reduced, preferably continuously, in the direction of the second axial section (6).

10. Shaft/gearwheel connection according to one of the preceding claims, **characterized in that,** furthermore, the gearwheel (4) is fastened to the shaft (2) by means of a rotary friction weld.

11. Method for producing a shaft/gearwheel connection having the following method steps:
- provision of a shaft and a gearwheel with a first axial section, a second axial section and an axial intermediate section, and
- shrinking of the gearwheel onto the shaft, with the result that a first shrink fit is produced in the first axial section, a second shrink fit is produced in the second axial section and a third shrink fit is produced in the axial intermediate section, it being possible for greater torques to be transmitted from the gearwheel to the shaft by the third shrink fit than by the first shrink fit and for smaller torques to be transmitted from the gearwheel to the shaft by the third shrink fit than by the second shrink fit.

12. Method for producing a shaft/gearwheel connection according to Claim 11, **characterized in that** the first axial section of the provided gearwheel is provided with a toothing system, preferably an external toothing system, with a multiplicity of teeth, whereas the second axial section does not have a toothing system, the tooth roots of the teeth being ground.

13. Method for producing a shaft/gearwheel connection according to Claim 12, **characterized in that** the tooth roots of the teeth are ground with the aid of a blasting process, preferably by sand blasting and/or glass bead blasting.

14. Method for producing a shaft/gearwheel connection according to Claim 13, **characterized in that** the tooth roots of the teeth are ground with the aid of at least two blasting processes which follow one another, preferably with the aid of two different blasting processes.

15. Method for producing a shaft/gearwheel connection according to one of Claims 11 to 14, **characterized in that** the shaft and the gearwheel are rotated with respect to one another during or after the shrinking-on, in order to produce a rotary friction weld between the shaft and the gearwheel.

## Revendications

1. Raccord arbre-roue dentée comprenant un arbre (2) et une roue dentée (4) emmanchée par frettage, qui présente une première portion axiale (5), qui est fixée à l'arbre au moyen d'un premier ajustement par frettage (8), et une deuxième portion axiale (6), qui est fixée à l'arbre au moyen d'un deuxième ajustement par frettage (9), des couples plus importants pouvant être transmis de la roue dentée (4) à l'arbre (2) par le deuxième ajustement par frettage (9) que par le premier ajustement par frettage (8), **caractérisé en ce qu'**entre la première portion axiale (5) et la deuxième portion axiale (6) est prévue une portion axiale intermédiaire (7), qui est fixée à l'arbre (2) au moyen d'un troisième ajustement par frettage (10), le troisième ajustement par frettage (10) permettant de transmettre des couples plus importants de la roue dentée (4) à l'arbre (2) que par le premier ajustement par frettage (8) et des couples moins importants que par le deuxième ajustement par frettage (9).

2. Raccord arbre-roue dentée selon la revendication 1, **caractérisé en ce que** le troisième ajustement par frettage (10) est réalisé de telle sorte que la valeur du couple pouvant être transmis par la roue dentée (4) à l'arbre (2) dans la direction de la deuxième portion axiale (6) soit augmentée dans la portion axiale intermédiaire (7).

3. Raccord arbre-roue dentée selon la revendication 2, **caractérisé en ce que** le troisième ajustement par frettage (10) est réalisé de telle sorte que la valeur du couple pouvant être transmis de la roue dentée (4) à l'arbre (2) dans la direction de la deuxième portion axiale (6) soit augmentée de manière continue dans la portion axiale intermédiaire (7).

4. Raccord arbre-roue dentée selon l'une quelconque des revendications précédentes, **caractérisé en ce que** la première portion axiale (5) est pourvue d'une denture (11), de préférence une denture extérieure, tandis que la deuxième portion axiale (6) ne présente aucune denture.

5. Raccord arbre-roue dentée selon la revendication 4, **caractérisé en ce que** la denture (11) comprend une pluralité de dents (12), les bases des dents (13) des dents (12) étant meulées.

6. Raccord arbre-roue dentée selon la revendication 5, **caractérisé en ce que** les bases des dents (13) des dents (12) sont meulées au moyen d'un procédé de pulvérisation par jet, de préférence par jet de sable ou par jet de perles de verre.

7. Raccord arbre-roue dentée selon la revendication 6, **caractérisé en ce que** les bases des dents (13) des dents (12) sont meulées à l'aide d'au moins deux procédés de pulvérisation par jet successifs, de préférence à l'aide de deux procédés de pulvérisation par jet différents.

8. Raccord arbre-roue dentée selon l'une quelconque des revendications 4 à 7, **caractérisé en ce qu'**au moins une autre roue dentée (16) est fixée sur l'arbre (2), laquelle n'est pas emmanchée par frettage, les bases de dents (13) de la denture (11) de la roue dentée emmanchée par frettage (4) étant réalisées plus larges que les bases des dents de la denture (18) de la roue dentée (16) non emmanchée par frettage.

9. Raccord arbre-roue dentée selon l'une quelconque des revendications 4 à 8, **caractérisé en ce que** la hauteur (H) des dents (12) est réduite, de préférence en continu, dans la direction de la deuxième portion axiale (6).

10. Raccord arbre-roue dentée selon l'une quelconque des revendications précédentes, **caractérisé en ce que** la roue dentée (4) est en outre fixée au moyen d'un soudage par friction à l'arbre (2).

11. Procédé de production d'un raccord arbre-roue dentée comprenant les étapes consistant à :
- fournir un arbre et une roue dentée avec une première portion axiale, une deuxième portion axiale et une portion axiale intermédiaire et
- emmancher par frettage la roue dentée sur l'arbre, de sorte qu'un premier ajustement par frettage soit obtenu dans la première portion axiale, un deuxième ajustement par frettage dans la deuxième portion axiale et un troisième ajustement par frettage dans la portion axiale intermédiaire, le troisième ajustement par frettage permettant de transmettre de la roue dentée à l'arbre des couples plus importants que par le premier ajustement par frettage et des couples moins importants que par le deuxième ajustement par frettage.

12. Procédé de production d'un raccord arbre-roue dentée selon la revendication 11, **caractérisé en ce que** la première portion axiale de la roue dentée fournie est pourvue d'une denture, de préférence d'une denture extérieure, ayant une pluralité de dents, tandis que la deuxième portion axiale ne présente pas de denture, les bases des dents étant meulées.

13. Procédé de production d'un raccord arbre-roue dentée selon la revendication 12, **caractérisé en ce que** les bases des dents sont meulées à l'aide d'un procédé de pulvérisation par jet, de préférence par jet de sable et/ou de perles de verre.

14. Procédé de production d'un raccord arbre-roue dentée selon la revendication 13, **caractérisé en ce que** les bases des dents sont meulées à l'aide d'au moins deux procédés de pulvérisation par jet successifs, de préférence à l'aide de deux procédés de pulvérisation par jet différents.

15. Procédé de production d'un raccord arbre-roue dentée selon l'une quelconque des revendications 11 à 14, **caractérisé en ce que** l'arbre et la roue dentée sont tournés l'un par rapport à l'autre pendant ou après l'emmanchement par frettage, afin de produire un soudage par friction entre l'arbre et la roue dentée.
